# EUROPEAN PATENT APPLICATION

(11) **EP 3 296 714 A1**
(43) Date of publication of application: **21.03.2018**
(21) Application number: 17181539.2
(22) Date of filing: 14.07.2017
(51) Int. Cl.: G01M 5/00

(54) **AUTOMATED STRUCTURAL INTERROGATION OF AIRCRAFT COMPONENTS**

(30) Priority: 19.09.2016 US 201615269356
(71) Applicant: Simmonds Precision Products, Inc., Vergennes, VT 05491 (US)
(72) Inventor: CARINI, Peter, Underhill, VT 05489 (US); GANG, Travis, Burlington, VT 05401 (US)
(74) Representative: Chiva, Andrew Peter

(57) **Abstract**

A structural health monitoring system and method includes a plurality of sensors configured to collect sensed data, a first structural component, and a controller configured to receive the sensed data and detect a first condition based upon the sensed data. The controller is further configured to initiate a first structural interrogation of the first structural component upon detection of the condition.

## Description

### BACKGROUND

The present invention relates generally to health monitoring, and in particular to a system and method for automated Structural Health Monitoring.

Structural Health Monitoring (SHM) may be utilized to induce ultrasonic waves within a material and monitor the effects. For example, vibrations are induced within the material and the response to those vibrations may be monitored. Often, a structure is interrogated at a given time when it is known that the structure is in good condition. This interrogation may be utilized to generate a baseline. Following obtainment of the baseline, the structure may be interrogated at one or more later times. Using these subsequent interrogations, trend data may be obtained, which may be compared to the baseline value to detect defects. SHM may also be performed without comparison to a baseline. For example, comparative vacuum monitoring may be used to detect a crack. In this situation, it may desirable to perform the interrogation under high stress when the crack is open in order to facilitate detection of the crack.

When performing SHM on aircraft, for example, many variables must be taken into account. It is desirable to limit these variables from interrogation to interrogation in order to limit variation between scans. This is done to ensure that any differences detected are caused by defects in the structure and are not caused by variations in environmental variables. For example, scans may be susceptible to temperature, so it may be desirable to have a constant temperature across all scans of a structure. It is therefore desirable to automate the process of performing SHM while accounting for the variation in these parameters.

### SUMMARY

A method of performing structural health monitoring includes determining a first set of conditions for which it is desirable to perform a structural interrogation of a first component; collecting, using a plurality of sensors, a collection of monitored data regarding at least one environmental variable; detecting, by a controller, the first set of conditions based on the monitored data; and performing a first structural interrogation of the first component based on the detected first set of conditions.

A structural health monitoring system includes a plurality of sensors configured to collect sensed data, a first structural component, and a controller configured to receive the sensed data and detect a first condition based upon the sensed data. The controller is further configured to initiate a first structural interrogation of the first structural component upon detection of the condition. The system may further comprise a second structural component, the controller may be further configured to determine a second set of conditions, different from the first set of conditions, for which it may be desirable to perform a second structural interrogation of the second component, detect the second set of conditions based on the monitored data, and perform the second structural interrogation based on the detected second set of conditions. The system may further comprise an aircraft system and the first and second structural components may be aircraft components. The first set of conditions may be a ground condition of an aircraft. The second set of conditions may be an in-flight condition of an aircraft. The sensed data may comprise at least one of weight-on-wheels, power-up, power-down, altitude, temperature, stress level, system shut-down, engine status, time, and mission priority. The controller may be implemented onboard an aircraft.

### BRIEF DESCRIPTION OF THE DRAWINGS

FIG. 1 is a block diagram illustrating an aircraft system that performs structural health monitoring.
FIG. 2 is a flowchart illustrating a method of performing structural health monitoring for an aircraft system.
FIG. 3 is a flowchart illustrating a method of performing structural health monitoring for an aircraft system.

### DETAILED DESCRIPTION

A system and method is disclosed herein for automatically performing structural monitoring for aircraft components. A desired set of conditions is determined for a structural component. These conditions may be manually determined, or determined by an on-board or ground-based computer system. The conditions may represent, for example, a ground condition or other condition in which the component is experiencing very little stress, or may represent an operational condition, such as an in-flight condition, in which the component is under heavy stress. A set of on-board sensors may be utilized to provide sensed environmental variables to a computer system that is utilized to detect the desired set of conditions. Once detected, a structural interrogation of the component may be initiated automatically by the on-board computer system, for example. For ground-based interrogations, a ground-based computer system may also be used to automatically initiate the interrogations.

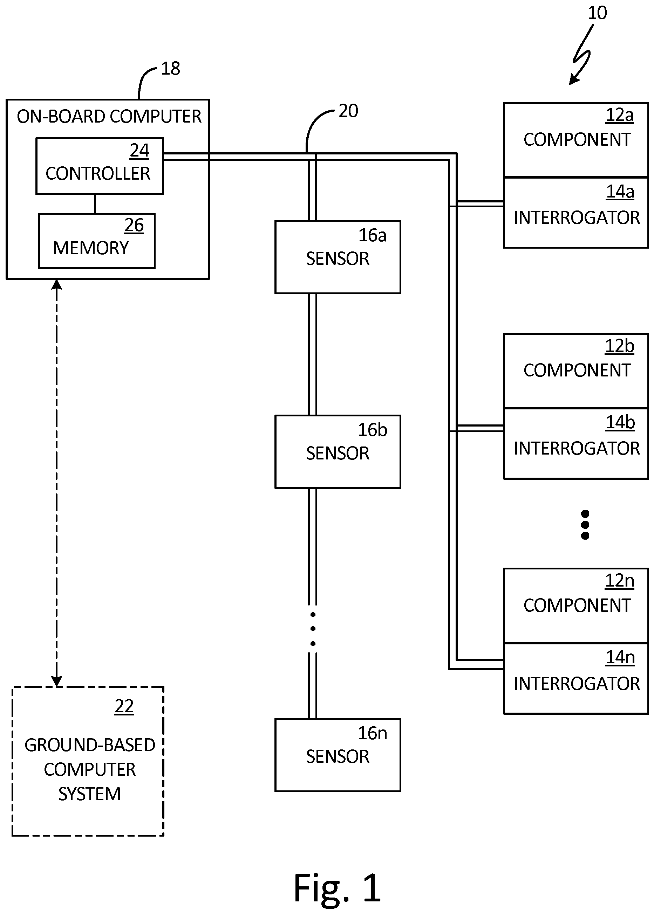

FIG. 1 is a block diagram illustrating structural health monitoring (SHM) system 10 utilized to perform structural interrogations of components 12a-12n. System 10 includes components 12a-12n, interrogators 14a-14n, sensors 16a-16n, on-board computer 18, communication bus 20 and ground-based computer 22. Interrogators 14a-14n may be, for example, transducers configured to induce ultrasonic waves within a respective structural component 12a-12n. While referred to as components, each component 12a-12n may be any component, structure or other physical element in which it is desirable to detect defects, such as cracks. Components 12a-12n may be, for example, aircraft components such as airfoils, casings, pylons, or any other component, structure, or part of a structure. System 10 may be an aircraft system with all illustrated elements except ground-based computer system 22 implemented on-board the aircraft.

On-board computer 18 includes controller 24 and memory 26. Controller 24 may be any digital circuit such as a microcontroller, microprocessor, programmable logic device (PLD), field programmable gate-array (FPGA) or other digital circuit. Memory 26 is any volatile or non-volatile memory. Communication bus may be any communication bus utilized to facilitate communication between sensors 16a-16n, interrogators 14a-14n and on-board computer 18. Communication bus 20 may be, for example, an RS485 bus or any other physical bus. Although illustrated in FIG. 1 as a physical bus, communication between any or all of sensors 16a-16n, interrogators 14a-14n and on-board computer 18 may be performed wirelessly. On-board computer 18 may also communicate with ground-based computer 22 wirelessly, for example. While illustrated as all connected to communication bus 20, sensors 16a-16n may communicate with on-board computer 18 and/or ground-based computer 22 in any way. For example, sensor data from sensors 16a-16n may be provided to on-board computer 18 and/or ground-based computer 22 wirelessly, on a separate bus, through direct connection, and/or through a separate computer system (not shown) connected to sensors 16a-16n.

Sensors 16a-16n are any analog or digital devices capable of sensing environmental variables. For example, sensors 16a-16n may be configured to provide signals indicative of weight-on-wheels, power-up, power-down, altitude, temperature, stress level, system shut-down, engine status or any other data regarding the environment within which system 10 presently resides. For example, environmental variables may include both variables that are intrinsic to the system in which sensors 16a-16n are implemented, or may be variables external to the system. The sensed data provided by sensors 16a-16n may be monitored by on-board computer 18 and/or ground-based computer 22 in order to detect a desired set of conditions. For example, it may be desirable to perform a structural scan of a component 12a-12n while the aircraft is on the ground and the temperature is between 20-30° Celsius (C). Thus, sensor 16a, which may be a weight-on-wheels sensor of an aircraft, and sensor 16b, which may be a temperature sensor, may be monitored by on-board computer 18. When on-board computer 18 detects that the aircraft is on the ground and the temperature is within the desired range, on-board computer 18 instructs an interrogator 14a-14n to initiate a scan of respective component 12a-12n, for example.

Other data that may be known by on-board computer 18 aside from the data collected by sensors 16a-16n may also be utilized to detect a desired set of conditions. For example, it may be desirable to perform interrogations a specific amount of time apart from one another. An internal clock of on-board computer 18 may be utilized to only initiate scans during a desired time period or at a specific time. On-board computer 18 and/or ground-based computer 22 may also take into account a known mission priority, for example, when initiating scans.

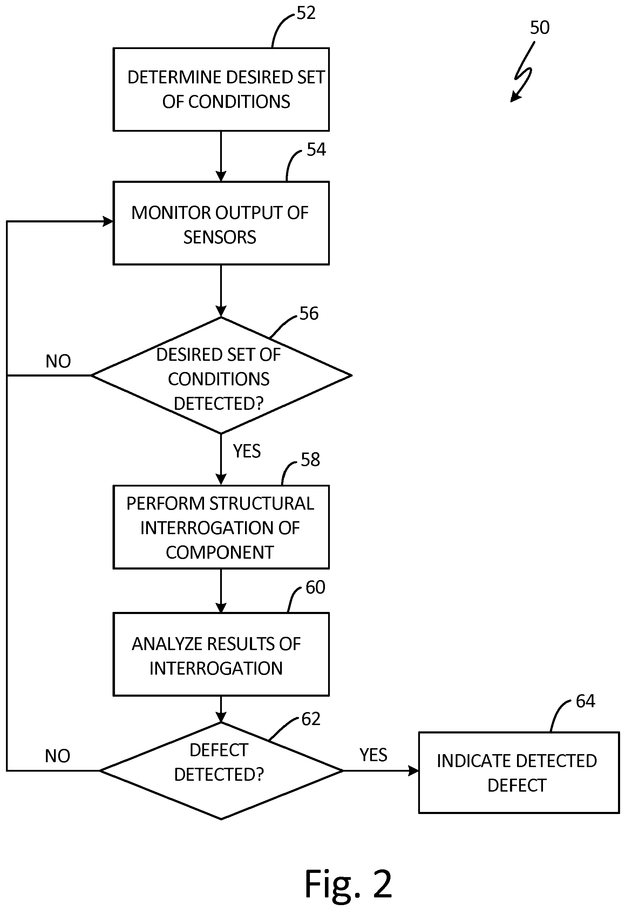

With continued reference to FIG. 1, FIG. 2 is a flowchart illustrating a method 50 of performing SHM for structural components 12a-12n. There may be two types of conditions for which it is desirable to perform an interrogation of component 12a-12n. The first approach may be to obtain a baseline scan when it is known that component 12a-12n is in good condition, and then perform subsequent scans in as close to the conditions of the baseline scan as possible. The second approach may to perform scans under a heavy stress condition specific to component 12a-12n. Although described with respect to two approaches, other approaches for determining desired sets of conditions may be used in order to minimize environmental variables and maximize the accuracy of the structural interrogations. In the embodiment illustrated in FIG. 2, structural scans are desired while component 12a-12n is under high stress.

The conditions are determined, at step 52, for which it is desirable to perform a structural interrogation of one or more components 12a-12n. The desired set of conditions may be determined using on-board computer 18 and/or ground-based computer 22, or may be determined manually. For example, a physics-based model or other model implemented on ground-based computer 22 may be utilized to determine the set of conditions for which components 12a-12n will be under the greatest stress. This may be, for example, when an aircraft takes a hard bank to the left, when the aircraft is at a high altitude, or any other set of conditions for which a component 12a-12n is under high stress. As another example, an engine pylon may be under greatest stress upon power-on of the engine. In another embodiment, a baseline interrogation may be manually performed, for example, on one or more components 12a-12n. Conditions detected during this baseline interrogation may then be utilized to establish the desired set of conditions.

Following determination of the desired set of conditions, on-board computer 18 or ground-based computer 22 may monitor the output of sensors 16a-16n at step 54. Sensors 16a-16n may communicate environmental data to on-board computer 18 or ground-based computer 22 over communication bus 20, or by any other means such as, for example, wirelessly, over a separate communication bus, through a separate computer system and/or by direct connection to on-board computer system 18 or ground-based computer 22. At step 56, it is determined, based upon the output of sensors 16a-16n, if the desired set of conditions has been detected. If the set of conditions has been detected, method 50 proceeds to step 58 and a structural interrogation of one or more components 12a-12n is performed. If the set of conditions has not been detected, method 50 returns to step 54 and continues to monitor the output of sensors 16a-16n.

Following performance of a structural scan by respective interrogator 14a-14n, at step 60, on-board computer 18 and/or ground-based computer 22 may analyze the results of the scan to determine if any defects are present. For example, on-board computer 18 may use comparative vacuum monitoring to determine if a crack is present within component 12a-12n. At step 62, it is determined if a defect has been detected. If a defect is detected, method 50 proceeds to step 64 and indicates a defect using any method of visual, audible, or any other type of indication, for example. If a defect is not detected, method 50 returns to step 54 and continues to monitor for the desired set of conditions. Following indication of a defect, method 50 may return to step 54 and conditions may continue to be monitored and/or the respective component 12a-12n may continue to have the detected defect monitored/scanned.

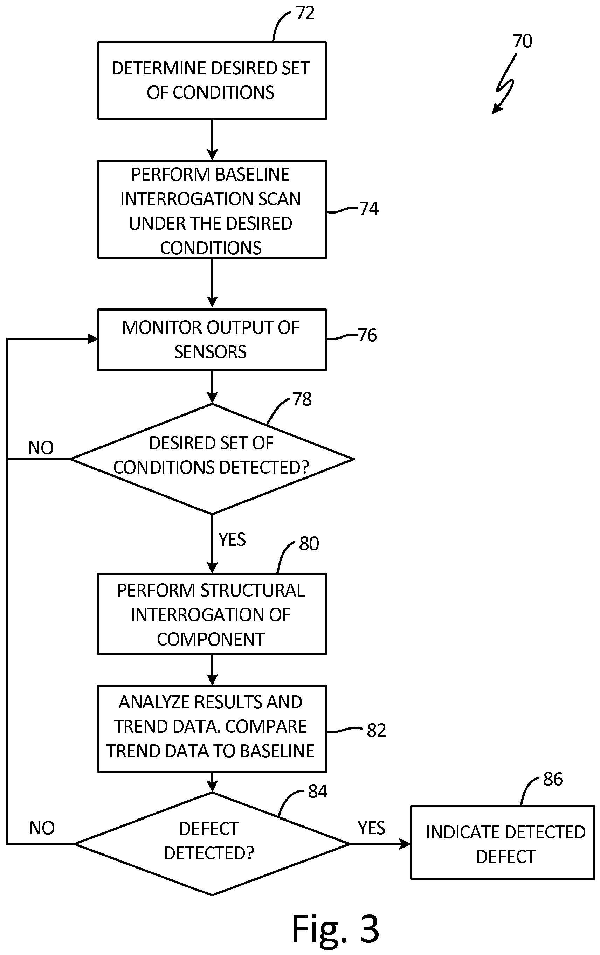

With continued reference to FIG. 1, FIG. 3 is a flowchart illustrating a method 70 of performing SHM for structural components 12a-12n. In the embodiment illustrated in FIG. 3, it is desirable to perform structural scans while component 12a-12n is under consistent conditions for which the scans may be compared to a baseline. At step 72, the conditions are determined for which it is desirable to perform a structural interrogation. The desired set of conditions may be determined using on-board computer 18 and/or ground-based computer 22, or may be determined manually. For example, a technician may select to have the scans performed while the aircraft is on the ground and the ambient temperature is within a desired range.

A baseline scan may be performed at step 74 under the desired conditions. This baseline scan may be initiated automatically by on-board computer 18 or ground-based computer 22, or may be initiated manually by the technician. The baseline scan may be stored by on-board computer 18, for example, in memory 26. At step 76, on-board computer 18 or ground-based computer 22 may monitor the output of sensors 16a-16n. Additionally, on-board computer 18 and/or ground-based computer 22 may monitor communication bus 20 and/or other channels on which data may be provided from sensors 16a-16n. At step 78, it is determined, based upon the output of sensors 16a-16n, if the desired set of conditions has been detected. If the set of conditions has been detected, method 70 proceeds to step 80 and a structural interrogation of component 12a-12n is performed. If the set of conditions has not been detected, method 70 returns to step 76 and continues to monitor the output of sensors 16a-16n.

Following performance of a structural scan by interrogator 14a-14n, at step 82, on-board computer 18 and/or ground-based computer 22 may analyze the results of the scan to determine if any defects are present. This may include, for example, trending the current results of the scan with previous scans data to the baseline scan to detect deviations. At step 84, if a defect is detected, method 70 proceeds to step 86 and indicates a defect using any method of visual, audible, or any other type of indication, for example. If a defect is not detected, method 70 returns to step 76 and continues to monitor for the desired set of conditions. Following indication of a defect, conditions may continue to be monitored and/or the respective component 12a-12n may continue to have the detected defect monitored/scanned.

While discussed with respect to the methods illustrated in FIGS. 2 and 3, other methods of detecting defects using the structural scans initiated by on-board computer 18 and/or ground-based computer 22 based upon a detected set of conditions may be utilized. By using system 10, the environmental conditions in which a scan is performed may be controlled, which greatly reduces the number of variables that need to be taken into account when detecting defects from a structural interrogation, which may increase the accuracy of the results and reduce the number of required scans.

### Discussion of Possible Embodiments

The following are non-exclusive descriptions of possible embodiments of the present invention.

A method of performing structural health monitoring includes determining a first set of conditions for which it is desirable to perform a structural interrogation of a first component; collecting, using a plurality of sensors, a collection of monitored data regarding at least one environmental variable; detecting, by a controller, the first set of conditions based on the monitored data; and performing a first structural interrogation of the first component based on the detected first set of conditions.

The method of the preceding paragraph can optionally include, additionally and/or alternatively, any one or more of the following features, configurations, operations, and/or additional components:

A further embodiment of the foregoing method, further including performing a baseline interrogation for the first set of conditions; and saving, by the controller, baseline data for the baseline interrogation.

A further embodiment of any of the foregoing methods, wherein performing the first structural interrogation includes performing a plurality of subsequent interrogations for each detection of the first set of conditions; and saving, by the controller, a subsequent result for each of the plurality of subsequent interrogations.

A further embodiment of any of the foregoing methods, further including trending, by the controller, the subsequent result for each of the plurality of subsequent interrogations to develop trend data; and comparing, by the controller, the trend data to the baseline data to detect a structural condition.

A further embodiment of any of the foregoing methods, further including determining a second set of conditions different from the first set of conditions for which it is desirable to perform a structural interrogation of the first component or a second component; detecting, by a controller, the second set of conditions based on the monitored data; and performing a second structural interrogation based on the detected second set of conditions.

A further embodiment of any of the foregoing methods, wherein the first and second components are aircraft components.

A further embodiment of any of the foregoing methods, wherein the first set of conditions is a ground condition of the aircraft.

A further embodiment of any of the foregoing methods, wherein the second set of conditions is an in-flight condition of the aircraft.

A further embodiment of any of the foregoing methods, wherein the monitored data comprises at least one of weight-on-wheels, power-up, power-down, altitude, temperature, stress level, system shut-down, engine status, time, mission priority.

A further embodiment of any of the foregoing methods, wherein the controller is an on-board computer system.

A structural health monitoring system includes a plurality of sensors configured to collect sensed data, a first structural component, and a controller configured to receive the sensed data and detect a first condition based upon the sensed data. The controller is further configured to initiate a first structural interrogation of the first structural component upon detection of the condition.

The system of the preceding paragraph can optionally include, additionally and/or alternatively, any one or more of the following features, configurations, operations, and/or additional components:

A further embodiment of the foregoing system, wherein the controller is further configured to initiate a baseline interrogation for the first set of conditions and save baseline data for the baseline interrogation.

A further embodiment of any of the foregoing systems, wherein the controller is further configured to initiate a plurality of subsequent interrogations for each detection of the first set of conditions and save a subsequent result for each of the plurality of subsequent interrogations.

A further embodiment of any of the foregoing systems, wherein the controller is further configured to trend the subsequent result for each of the plurality of subsequent interrogations to develop trend data and compare the trend data to the baseline data to detect a structural condition.

A further embodiment of any of the foregoing systems, further including a second structural component, wherein the controller is further configured to determine a second set of conditions different from the first set of conditions for which it is desirable to perform a second structural interrogation of a the second component, detect the second set of conditions based on the monitored data, and perform the second structural interrogation based on the detected second set of conditions.

A further embodiment of any of the foregoing systems, wherein the system is an aircraft system and the first and second structural components are aircraft components.

A further embodiment of any of the foregoing systems, wherein the first set of conditions is a ground condition of the aircraft.

A further embodiment of any of the foregoing systems, wherein the second set of conditions is an in-flight condition of the aircraft.

A further embodiment of any of the foregoing systems, wherein the sensed data comprises at least one of weight-on-wheels, power-up, power-down, altitude, temperature, stress level, system shut-down, engine status, time, mission priority.

A further embodiment of any of the foregoing systems, wherein the controller is implemented onboard the aircraft.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of performing structural health monitoring, the method comprising:
determining a first set of conditions for which it is desirable to perform a structural interrogation of a first component;
collecting, using a plurality of sensors, a collection of monitored data regarding at least one environmental variable;
detecting, by a controller, the first set of conditions based on the monitored data; and
performing a first structural interrogation of the first component based on the detected first set of conditions.

2. The method of claim 1, further comprising:
performing a baseline interrogation for the first set of conditions; and
saving, by the controller, baseline data for the baseline interrogation.

3. The method of claim 2, wherein performing the first structural interrogation comprises:
performing a plurality of subsequent interrogations for each detection of the first set of conditions; and
saving, by the controller, a subsequent result for each of the plurality of subsequent interrogations.

4. The method of claim 3, further comprising:
trending, by the controller, the subsequent result for each of the plurality of subsequent interrogations to develop trend data; and
comparing, by the controller, the trend data to the baseline data to detect a structural condition.

5. The method of any previous claim, further comprising:
determining a second set of conditions different from the first set of conditions for which it is desirable to perform a structural interrogation of the first component or a second component;
detecting, by a controller, the second set of conditions based on the monitored data; and
performing a second structural interrogation based on the detected second set of conditions.

6. The method of claim 5, wherein the first and second components are aircraft components.

7. The method of any previous claim, wherein the first set of conditions is a ground condition of an aircraft.

8. The method of any of claims 5-7, wherein the second set of conditions is an in-flight condition of an aircraft.

9. The method of any previous claim, wherein the monitored data comprises at least one of weight-on-wheels, power-up, power-down, altitude, temperature, stress level, system shut-down, engine status, time, mission priority.

10. The method of any previous claim, wherein the controller is an on-board computer system.

11. A structural health monitoring system comprising:
a plurality of sensors configured to collect sensed data;
a first structural component; and
a controller configured to receive the sensed data and detect a first condition based upon the sensed data, wherein the controller is further configured to initiate a first structural interrogation of the first structural component upon detection of the condition.

12. The system of claim 11, wherein the controller is further configured to initiate a baseline interrogation for the first set of conditions and save baseline data for the baseline interrogation.

13. The system of claim 12, wherein the controller is further configured to initiate a plurality of subsequent interrogations for each detection of the first set of conditions and save a subsequent result for each of the plurality of subsequent interrogations.

14. The system of claim 13, wherein the controller is further configured to trend the subsequent result for each of the plurality of subsequent interrogations to develop trend data and compare the trend data to the baseline data to detect a structural condition.

15. The system of any of claims 11-14, further comprising:
a second structural component;
wherein the controller is further configured to determine a second set of conditions different from the first set of conditions for which it is desirable to perform a second structural interrogation of the second component, detect the second set of conditions based on the monitored data, and perform the second structural interrogation based on the detected second set of conditions.
